# EUROPÄISCHE PATENTSCHRIFT

(11) **EP 2 488 274 B1**
(45) Veröffentlichungstag und Bekanntmachung des Hinweises auf die Patenterteilung: **30.11.2016**
(21) Anmeldenummer: 10768899.6
(22) Anmeldetag: 06.10.2010
(51) Int. Cl.: B01D 45/16, B01D 46/24, B01D 46/00, B01D 46/52, B01D 50/00, F02M 35/02, F02M 35/024

(54) **FILTEREINSATZ UND FILTERVORRICHTUNG**
FILTER INSERT AND FILTER DEVICE
INSERT DE FILTRAGE ET DISPOSITIF DE FILTRAGE

(30) Priorität: 12.10.2009 DE 102009049170
(43) Veröffentlichungstag der Anmeldung: 22.08.2012
(73) Patentinhaber: Mann + Hummel GmbH, 71638 Ludwigsburg (DE)
(72) Erfinder: BECKER, Stefan, 68305 Mannheim (DE); STEINS, Oliver, 67354 Römerberg (DE); MENSSEN, Jörg, 71706 Markgröningen (DE); HILARIUS, Kai, 67354 Römerberg (DE)
(86) Internationale Anmeldenummer: PCT/EP2010/064930
(87) Internationale Veröffentlichungsnummer: WO 2011/045220

(56) Entgegenhaltungen:
- EP-A1- 1 364 695
- WO-A2-2008/123392
- DE-A1- 19 638 790
- US-A1- 2008 148 695

## Beschreibung

### Technisches Gebiet

Die Erfindung betrifft einen Filtereinsatz gemäß Anspruch 1 und eine Filtervorrichtung gemäß Anspruch 10.

### Stand der Technik

Aus der DE 196 38 790 A1 ist ein Luftfilter mit einem im Gehäuse schwenkbaren Trägerelement für ein Filterelement bekannt. Aus der EP 1 364 695 A1 ist ein Filter mit einem Filtergehäuse bekannt, in den ein Filterelement einsetzbar ist. Aus der WO 2008/123392 A2 ist ein Luftfilter mit einem vertikal gehaltenen Filterelement bekannt. Aus der DE 198 49 089 A1 ist ein Filter, insbesondere für die Ansaugluft von Brennkraftmaschinen bekannt, umfassend ein Gehäuse mit einem Rohlufteinlass und einem Reinluftauslass sowie einem im Gehäuse angeordneten Filterelement, welches im Wesentlichen aus einem sternförmig gefalteten Filterstoff besteht, wobei das Gehäuse zwei- oder dreiteilig ist und aus einem zylinderförmigen Gehäusemantel, einem lösbar verbundenen Topf und einem reinluftseitigen Deckel besteht. Aus der WO 2008/080129 A1 ist ein Filtereinsatz bekannt, weicher einen Rahmen aufweist, der auf zwei Seiten mehrere ebene und schräge Abschnitte aufweist. Eine Variabilität hinsichtlich der Verwendung verschiedenartiger Filterelemente und -medien ist nicht vorgesehen.

Der Erfindung liegt die Aufgabe zugrunde, Filtervorrichtungen ähnlicher Bauart in kontrollierbarem Maße variabel zu gestalten, insbesondere derart, dass für Varianten von Filterelementen die gleiche Gehäusebauform verwendet werden kann und gleichzeitig sicher gestellt werden kann, dass nur Filterelemente mit bestimmten Eigenschaften eingesetzt werden können.

### Offenbarung der Erfindung

Die Erfindung betrifft einen Filtereinsatz, umfassend
a. ein Filterelement, mit einer einlassseitigen Endfläche und einer auslassseitigen Endfläche, wobei die direkte Verbindung der einlaßseitigen Endfläche mit der auslassseitigen Endfläche der makroskopischen, insbesondere auf eine gesamte Filtervorrichtung bezogenen Hauptströmungsrichtung entspricht und
b. einen entlang der Seitenflächen des Filterelements umlaufenden Rahmen, welcher mit dem Filterelement verbunden ist, wobei der Rahmen eine axiale Dichtung trägt, deren Dichtrichtung in oder entgegen der Hauptströmungsrichtung ausgerichtet ist, wobei die Dichtung in Dichtrichtung mit einer Dichtfläche eines Filtergehäuses in Kontakt bringbar ist, wodurch die Einlassseite des Filtereinsatzes dichtend von der Auslassseite trennbar ist,
wobei der Rahmen im Bereich einer Endfläche auf zwei gegenüber liegenden Seiten des Filterelements eine erste und eine zweite Kontaktfläche zum Verspannen des Filterelements mittels eines ersten und eines zweiten Verspannelements aufweist, wobei die Kontaktflächen im Wesentlichen entgegengesetzt zur Dichtrichtung ausgerichtet sind,
wobei die Kontaktflächen jeweils ein Höhenprofil aufweisen, wobei die Kontaktflächen jeweils ein individuelles, entlang der Seitenflächen verlaufendes Höhenprofil aufweisen.

Erfindungsgemäß haben die Höhenprofile entlang zweier gegenüberliegenden Seitenflächen des Filterelements eine gemeinsame Vorzugsrichtung, entlang welcher die Höhe überwiegend ansteigt, wobei der Anstieg kontinuierlich oder in einzelnen Abschnitten erfolgt.

Als Dichtrichtung wird dabei die Richtung bezeichnet, in welcher die Axialdichtung gegen eine Dichtfläche zu verpressen ist, um eine Dichtwirkung zu erzeugen.

Filtereinsätze gemäß dieser Erfindung haben den Vorteil, dass für verschiedene solcher Filtereinsätze, welche zum Beispiel mit unterschiedlichen Filtermedien versehen sein können und damit unterschiedliche Leistungscharakteristika bei Staubkapazität, Differenzdruck, Feuchtigkeitsresistenz und Flammbeständigkeit aufweisen können, individuelle Rahmen und korrespondierende individuelle Verspannelemente vorgesehen werden können, wobei für alle Varianten die gleiche Gehäusebauform verwendet werden kann.

Auf diese Weise können mit geringem Aufwand Varianten von Filtervorrichtungen gebildet werden, für welche das gleiche Gehäuse verwendet werden kann, wobei für jede Variante eine individuelle Kombination von Rahmengeometrie und der Geometrie der Verspannelemente verwendet wird.

Vorteilhaft kann auf diese Weise für definierte Einsatzzwecke durch die Vorgabe der Form der Verspannelemente sicher gestellt werden, dass nur Filterelemente mit bestimmten Eigenschaften eingesetzt werden können.

So kann zum Beispiel für eine bestimmte Brennkraftmaschine, deren Ansaugluft durch den erfindungsgemäßen Filtereinsatz gereinigt werden soll, sicher gestellt werden, dass nur Filterelemente mit Filtermedien eingesetzt werden können, welche für den bestimmungsgemäßen Einsatz über eine ausreichende Feuchtigkeitsbeständigkeit verfügen. Somit wird eine einfache Anpassung von Arbeitsmaschinen und Antriebsaggregaten an unterschiedliche Einsatzorte und Einsatzbedingungen ermöglicht, wobei jeweils die für die Umgebungsbedingungen optimale Filtrationsleistung erreicht werden kann.

Besonders vorteilhaft kann die Anpassung der Filtervorrichtung an die jeweiligen Randbedingungen direkt am Einsatzort erfolgen, wobei nur die Verspannelemente angepasst werden müssen.

In einer Ausführungsform liegt die Dichtrichtung in Hauptströmrichtung, d.h. die Dichtung wird in Hauptströmrichtung verpresst. In einer alternativen Ausführungsform liegt die Dichtrichtung entgegen der Hauptströmungsrichtung.

In einer Ausführungsform ist die Höhe des Höhenprofils durch den Abstand des jeweiligen Kontaktflächenabschnitts von der durch die Dichtung des Filtereinsatzes aufgespannten Ebene definiert.

In einer Ausführungsform weist das Höhenprofil mindestens zwei aneinander anschließende Bereiche auf, wobei ein Bereich in einem Winkel zur auslassseitigen Endfläche verläuft und der daran anschließende Bereich parallel zur auslassseitigen Endfläche des Filtereinsatzes verläuft. Zusätzlich oder alternativ können Bereiche mit nicht kontinuierlicher Steigung wie Kreis- oder Parabelausschnitte oder sonstige Kurvenformen zum Einsatz kommen.

In einer Ausführungsform bildet die Vorzugsrichtung die Einbaurichtung des Filtereinsatzes in ein Filtergehäuse.

In einer Ausführungsform weist der Rahmen im Bereich der ersten und/oder der zweiten Seitenfläche mindestens eine Nut zur Positionierung des Filtereinsatzes beim Einbau auf, welche parallel zu der durch die Dichtung aufgespannten Ebene zwischen dieser Ebene und der Kontaktfläche verläuft und entgegen der Vorzugsrichtung einen Teil des Höhenprofils hinterschneidet.

Diese Nut hat den Vorteil, dass im Zusammenspiel mit einer durch eine Rippe gebildeten Feder an der Wand des Filtergehäuses der Filtereinsatz beim Einschieben in das Filtergehäuse am Ende des Einschiebevorgangs in einer optimalen Position im Filtergehäuse geführt wird, wodurch ein Verkanten oder Verdrehen des Filterelements vermieden werden kann.

Ferner kann die Nut für bestimmte Filtereinsatzvarianten auch nur an einer bestimmten Seite vorgesehen werden, wodurch noch zusätzliche Varianten mit verschiedenen Gehäusen ermöglicht werden, deren Geometrie durch Wegnahme der Rippen entsprechend einfach angepasst werden kann. Beispielsweise können für Applikationen, welche Feuchtigkeitsbeständigkeit erfordern, grundsätzlich auf einer Seite eine Rippe vorgesehen werden, wobei gleichzeitig nicht feuchtigkeitsbeständige Filtereinsätze auf der betroffenen Seite nie eine Nut aufweisen. Gleichzeitig kann hierbei immer noch durch die unterschiedlichen Geometrien von Rahmen und Verspannelementen eine Differenzierung weiteren Eigenschaften wie Flammschutzeigenschaften usw. erreicht werden.

Gemäß einer weiteren Ausführungsform ist der Rahmen im Bereich der einlassseitigen oder auslassseitigen Endfläche angeordnet und mit einer ringförmigen Endscheibe verbunden, welche die Endfläche teilweise in einem äußeren Bereich überdeckt und eine durchströmbare Öffnung aufweist, wobei auf der Endscheibe innerhalb der Dichtung eine ringförmige, teilweise oder vollständig umlaufende Rippe angeordnet ist, welche abstehend von der Endscheibe die Fläche durchschneidet, welche durch die Dichtfläche der Dichtung in unverspanntem Zustand gebildet wird. Die Ringform kann hierbei kreisringförmig, ellipsenförmig oder oval ausgebildet sein.

Die ringförmig umlaufende Rippe ist dabei so ausgebildet, dass sie in eine Öffnung des Gehäuses eintaucht und von dieser umschlossen wird, wobei die Öffnung innerhalb der Dichtfläche des Gehäuses angeordnet ist.

Dies hat den Vorteil, dass beim Einschieben eines Filtereinsatzes die Dichtung die Dichtfläche über einen großen, anfänglichen Teil des Einschubweges nicht oder nur leicht berührt, wobei vermieden wird, dass Partikel, welche im Bereich der Dichtfläche an der Gehäuseinnenwand haften, beim Einschieben des Filtereinsatzes durch die Dichtung gelöst werden und auf die Reinseite gelangen.

In einer vorteilhaften Weiterbildung ist die ringförmig umlaufende Rippe im dem Gehäusedecket zugewandten Bereich erhöht ausgeführt, wobei dieser Bereich weiter als der übrige Bereich in die Öffnung innerhalb der Dichtfläche des Gehäuses eintaucht. Bei einer Überkopfmontage des Filtereinsatzes von unten nach oben in ein Gehäuse stützt sich somit bei vollständig eingeschobenem Filtereinsatz der erhöhte Bereich in der Öffnung ab und verhindert das Herausfallen des Filtereinsatzes. Damit wird der Einbau erleichtert, da der Filtereinsatz und ein nachträglich aufgebrachter Gehäusedeckel, welcher den Filtereinsatz fixiert, nacheinander montiert werden können, ohne den Filtereinsatz manuell in Position halten zu müssen.

Alternativ kann die umlaufende Rippe auch außerhalb der Dichtung angebracht werden, in diesem Fall muss eine Vertiefung oder Nut im Gehäuse außerhalb der Dichtfläche vorgesehen sein.

In einer Ausführungsform sind am Rahmen im Anschluss an die Kontaktflächen ein erster und ein zweiter Fortsatz angeordnet, welche sich in Einbaurichtung über die durch die Dichtung projizierte Ringfläche hinaus erstrecken.

Diese Fortsätze wirken mit einer Rampenkontur zusammen, welche das Filtergehäuse im Inneren jeweils an den beiden Seitenwänden aufweist, deren Rampenfläche in Richtung des Aufnahmebereichs gerichtet sind, wobei sich der Abstand der Rampenfläche zur Aufnahmefläche in Einbaurichtung verringert, wobei die Fortsätze am Rahmen beim Einbau des Filtereinsatzes von der Rampenfläche in Richtung der Dichtfläche geleitet werden können, wodurch der Filtereinsatz so positioniert wird, dass die Rippe des Gehäuses in die Nut des Filtereinsatzes eintauchen kann.

Dies hat den Vorteil, dass der Filtereinsatz beim Einschieben stufenweise mit zunehmend geringerem möglichem Spiel seiner Endposition entgegengeführt wird, ohne dass durch die Führung ein großer Widerstand durch Reibung entstehen kann. Ferner ist beim Ansetzen des Filterelements zu Beginn des Einbauvorgangs keine große Präzision notwendig. Ferner wird die Gefahr des Verkantens des Filtereinsatzes beim Einbau reduziert und der Filtereinsatz so vorpositioniert, dass die Verspannelemente keinen großen Weg zwischen der losen Position im vollständig eingeschobenen Zustand und der Arbeitsposition in verspanntem und dichtem Zustand überwinden müssen.

In einer Ausführungsform weist der Filtereinsatz an seinen Seitenflächen im Bereich der dem Rahmen gegenüber liegenden Endfläche mindestens zwei Abstandshalternoppen aus elastischem Material auf. Diese sind vorteilhaft so ausgebildet, dass sie im eingebauten Zustand eine schwingungsfeste Abstützung des Filterelements im Gehäuse erzielen.

Der erfindungsgemäße Filtereinsatz kann verschiedene Arten und Bauformen von Filterelementen aufweisen.

In einer Ausführungsform weist das Filterelement mindestens ein ringförmiges, sternförmig gefaltetes Filtermedium auf, wobei die Stirnseiten des Filtermediums die einlassseitige und auslassseitige Endfläche des Filterelements bilden.

In einer vorteilhaften Ausführungsform weist der Filtereinsatz zwei ringförmige, sternförmig gefaltete Filtermedienbälge auf, wobei ein kleiner Filtermedienbalg konzentrisch in einem großen Filtermedienbalg angeordnet ist, wobei der Rahmen im Bereich einer ersten Endfläche mit dem großen Filtermedienbalg dichtend verbunden ist, wobei im Bereich der ersten Endfläche der Innenraum des kleinen Filtermedienbalges vollständig verschlossen ist und wobei im Bereich der zweiten Endfläche die Stirnseiten der beiden Filtermedienbälge dichtend miteinander verbunden sind. Dabei kann der äußere Filtermedienbalg in einer Ausgestaltung von außen nach innen und der innere Filtermedienbalg von innen nach außen durströmt werden. In dieser Ausgestaltung befinden sich der Rahmen und die Dichtung des Filtereinsatzes im Bereich der auslassseitigen Endfläche des Filterelements. Alternativ ist eine entgegengesetzte Strömungsführung denkbar.

In einer Ausführungsform ist das Filterelement ein Kompaktluftfilterelement mit einer Vielzahl von im Bereich der Endflächen wechselseitig verschlossenen Kanälen, insbesondere gebildet durch abwechselnd aufeinanderliegenden Lagen eines flachen und eines gewellten Filtermediums.

In einer Ausführungsform ist das Filterelement ein rechteckförmiges, zickzack-förmig gefaltetes Filterelement, wobei die Endflächen des Filterelements durch die Faltkanten gebildet sind.

Die Erfindung betrifft weiter einen Filtereinsatz mit einem Filtermedium und einer Endscheibe, wobei an der Endscheibe eine umlaufende, axiale oder radiale Dichtung angeordnet ist und die Endscheibe eine umlaufende Rippe aufweist. Weitere Ausgestaltungen dieses Filtereinsatzes ergeben sich aus Kombinationen mit einzelnen Merkmalen der Ansprüche 7-12.

Die Erfindung betrifft weiter eine Filtervorrichtung, umfassend einen Filtereinsatz nach einer der beschriebenen Ausführungsformen und ein Filtergehäuse mit einem Einlassbereich und einem Auslassbereich für zu filtrierende Medien, wobei der Einlassbereich oder der Auslassbereich einen Aufnahmebereich mit einer ringförmigen, mit der Dichtung des Filtereinsatzes korrespondierenden Dichtfläche aufweist.

In einer Ausführungsform ist an einer Gehäuseseite eine Montageöffnung vorgesehen, durch welche der Filtereinsatz in Einbaurichtung senkrecht zur Hauptströmungsrichtung in das Gehäuse einbringbar ist. Dabei ist die Montageöffnung von einem Deckel, insbesondere dichtend verschließbar, wobei an dem Deckel zwei Verspannschwerter angeordnet sind, welche in das Filtergehäuse hineinragen, wobei das erste Verspannschwert entlang der ersten Seitenfläche des Filtereinsatzes verläuft und das zweite Verspannschwert entlang der zweiten Seitenfläche des Filtereinsatzes verläuft. Die Verspannschwerter weisen Verspannflächen auf, welche in Richtung des Aufnahmebereichs ausgerichtet sind, wobei die Verspannflächen jeweils ein Höhenprofil aufweisen, wobei die Höhenprofile der Verspannflächen jeweils mit dem entsprechenden Höhenprofil der am Rahmen angeordneten Kontaktflächen korrespondieren und eine Gegenform zu diesen Bilden. Bei montiertem Deckel und voll in das Filtergehäuse hineinragenden Verspannschwertern bringen die Verspannschwerter eine Kraft auf die korrespondierenden Kontaktflächend des Filtereinsatzes auf, derart, dass die Dichtung des Filtereinsatzes gegen die Dichtfläche des Gehäuses verpresst ist und der Filtereinsatz dadurch im Gehäuse fixiert ist.

In einer Ausführungsform sind in den Gehäusewänden zwei Ausbuchtungen vorgesehen, welche ebene, in Richtung des Aufnahmebereichs gerichtete Stützflächen aufweisen, auf weichen sich die ebenen Stützflächen der Verspannschwerter, welche den Verspannflächen gegenüber liegen, abstützen.

In einer Ausführungsform der Filtervorrichtung ist im Filtergehäuse mindestens eine Rippe vorgesehen, welche an einer Seitenwand des Filtergehäuses angeordnet ist und ausgehend vom Boden des Filtergehäuses in Richtung der Montageöffnung verläuft, wobei die Rippe so ausgebildet ist, dass sie beim Einbau des Filtereinsatzes in die Nut des Filtereinsatzes eintaucht.

In einer Ausführungsform weist das Filtergehäuse im Inneren an den beiden Seitenwänden jeweils eine Rampenkontur auf, deren Rampenfläche in Richtung des Aufnahmebereichs gerichtet sind, wobei sich der Abstand der Rampenfläche zur Aufnahmefläche in Einbaurichtung verringert, wobei der Fortsatz der Endscheibe beim Einbau des Filtereinsatzes von der Rampenfläche in Richtung des Aufnahmebereichs geleitet werden kann, wodurch der Filtereinsatz so positioniert wird, dass die Rippe des Gehäuses in die Nut des Filtereinsatzes eintauchen kann.

In einer Ausführungsform ist die Montageöffnung auf der Seite des Aufnahmebereichs, in welchem der Rahmen des Filtereinsatzes aufnehmbar ist, tiefer in die Seitenwand des Gehäuses eingeschnitten als im Bereich der anderen Endfläche des Filtereinsatzes.

In einer Ausführungsform ist die Montageöffnung einlassseitig durch einen Henkel begrenzt, an welchem eine in den Innenraum hinein stehende Abkipprippe angeordnet ist, an welche der Filtereinsatz anschlägt, wenn er innerhalb des Gehäuses gekippt wird. Hierdurch wird verhindert, dass der Filtereinsatz beim Herausnehmen an dem Henkel hängen bleiben kann.

In einer Ausführungsform weist das Filtergehäuse innerhalb der Dichtfläche eine Öffnung auf, wobei die Öffnung so ausgebildet ist, dass sie die ringförmige, teilweise oder vollständig umlaufende Rippe auf der Endscheibe des Filtereinsatzes dann umschließt, wenn der Filtereinsatz vollständig in Einbaurichtung in das Filtergehäuse eingeschoben ist.

### Kurze Beschreibung der Zeichnungen

- Figur 1: zeigt eine Ausführungsform eines erfindungsgemäßen Filtereinsatzes 1.
- Figur 2: zeigt ein Gehäuse einer erfindungsgemäßen Filtervorrichtung.
- Figur 3: zeigt den Deckel eines Gehäuses einer erfindungsgemäßen Filtervorrichtung.
- Figur 4: zeigt einen Teilschnitt einer Ausführungsform einer erfindungsgemäßen Filtervorrichtung mit einer erfindungsgemäßen Zyklonanordnung.
- Figur 5: zeigt einen Schnitt durch einen erfindungsgemäßen Filtereinsatz,
- Figur 6: zeigt einen weiteren Schnitt durch einen erfindungsgemäßen Filtereinsatz.

### Ausführungsform(en) der Erfindung

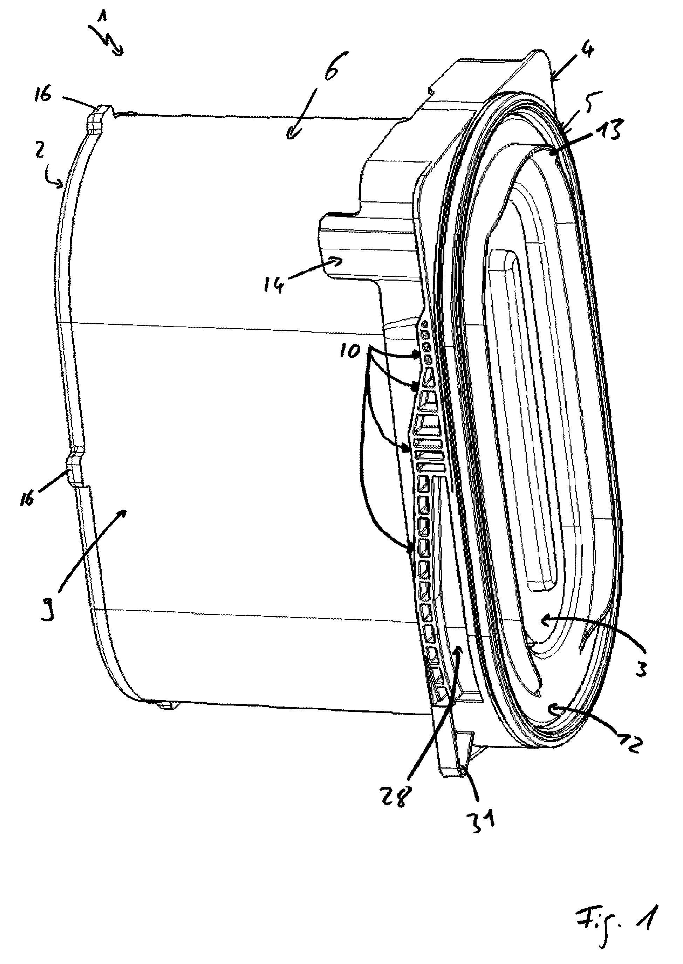

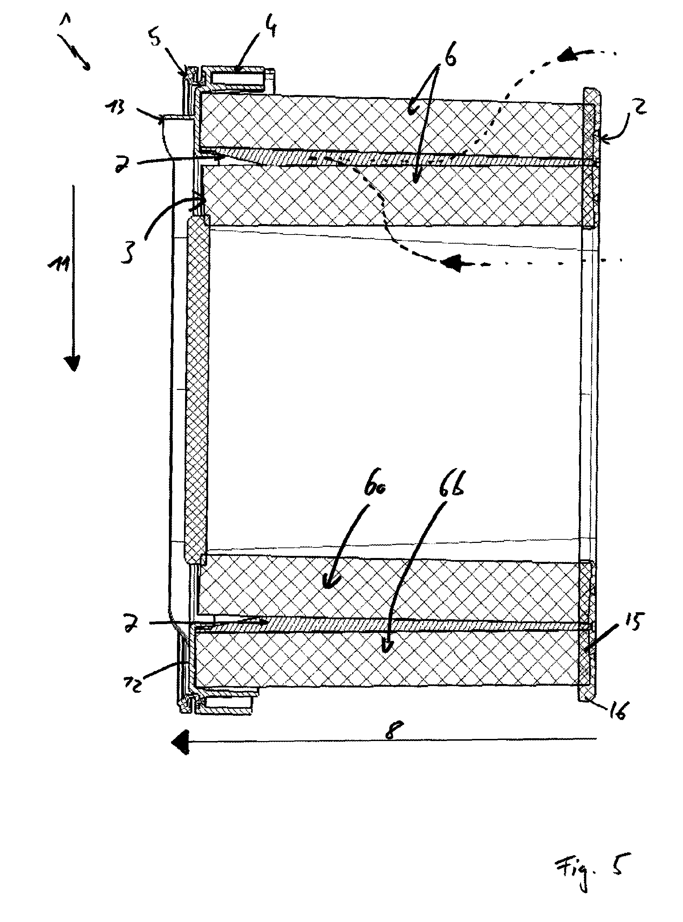

Figur 1 und Figur 5 zeigen eine Ausführungsform eines erfindungsgemäßen Filtereinsatzes 1. In dieser Ausführungsform ist an der auslassseitigen Endfläche 3 des Filterelements 6 ein Rahmen 4 angeordnet, welcher eine axial wirkende Dichtung 5 trägt. Das Filterelement 6 ist aus zwei sternförmig gefalteten, ringförmigen Filtermedlenbälgen 6a und 6b gebildet. Die Filtermedienbälge weisen jeweils einen ovalen Querschnitt mit zwei geraden, sich parallel gegenüberliegenden Abschnitten auf. Ein kleinerer Filtermedienbalg 6a ist in dem durch den größeren Filtermedienbalg 6b umschlossenen Ringraum konzentrisch so angeordnet, dass zwischen den Filtermedienbälgen ein Strömungskanal 7 für das durchströmende, zu filternde Medium gebildet wird.

Im Bereich der auslassseitigen Endfläche 3 des Filterelements bildet der Strömungskanal 7 die Ausströmöffnung des Filterelements 6, an der einlassseitigen Endfläche 2 sind die Filtermedienbälge 6a,b dichtend miteinander verbunden. Der Innenraum des kleineren Filtermedienbalgs ist im Bereich der auslassseitigen Endfläche 3 durch eine Endscheibe oder eine ähnliche Konstruktion dichtend verschlossen.

Auf diese Weise wird der größere Filtermedienbalg 6b von außen nach innen durchströmt und der innere Filtermedienbalg 6a von innen nach außen.

Am Filtereinsatz 1 wird damit eine Umlenkung der Strömung erzielt, wobei die Strömung von der durch die Verbindung der einlassseitigen Endfläche 2 mit der auslassseitigen Endfläche 3 definierten Hauptströmungsrichtung 8 abweicht.

Der Rahmen 4 umläuft im Bereich der auslassseitigen Endfläche 3 die Seitenflächen des Filterelements 6, wobei der Rahmen durch vier Fortsätze entlang der geraden (oder nur leicht gekrümmten) Seitenflächen 9 des Filterelements einen rechteckigen Querschnitt bildet.

Entlang der geraden Seitenflächen 9 des Filterelements 6 weist der Rahmen jeweils eine Kontaktfläche 10 zum Verspannen des Filtereinsatzes in einem Gehäuse auf, wobei die Kontaktflächen entgegen der Dichtrichtung und entgegen der Hauptströmungsrichtung 8 ausgerichtet sind.

Die Kontaktflächen weisen ein entlang der geraden Seitenflächen 9 verlaufendes Höhenprofil auf, wobei die Kontaktflächen in einigen Bereichen des Höhenprofils eine Flächennormale aufweisen können, welche nicht parallel zur Hauptströmungsrichtung liegt sondern mit dieser einen Winkel einschließt. In der gezeigten Ausführungsform weist das Höhenprofil ebene Abschnitte auf, welche parallel zur auslassseitigen Endfläche 3 verlaufen und ferner schräge Abschnitte, welche eine entlang der geraden Seitenflächen 9 in Einbaurichtung positive Steigung aufweisen, wobei die Höhe bzw. der Abstand der Kontaktfläche zur auslassseitigen Endfläche ansteigt.

Die Einbaurichtung bildet damit eine Vorzugsrichtung, entlang welcher die Höhe überwiegend ansteigt.

Die Kontaktflächen sind dabei derart gestaltet, dass sie mit Verspannelementen in einem Filtergehäuse in Kontakt bringbar sind, welche ein zu dem jeweiligen Höhenprofil der Kontaktflächen korrespondierendes Höhenprofil aufweisen, so dass in eingebautem Zustand Formschluss zwischen den Höhenprofilen hergestellt ist.

Die beiden Höhenprofile entlang der geraden Seitenflächen des Filterelements 6 unterscheiden sich in ihrer Geometrie derart, dass auf beiden Seiten jeweils ein Verspannelement mit einer anderen, korrespondierenden Form verwendet werden muss. In einer Ausführungsform des erfindungsgemäßen Filtereinsatzes sind an der Kontaktfläche treppenartig mehrere schräge und ebene Abschnitte abwechselnd nacheinander angeordnet. Dies hat den Vorteil, dass erst am Schluss des Einschiebevorganges die jeweils korrespondierenden ebenen Abschnitte der Kontaktflächen des Filtereinsatzes und der Verspannflächen der Verspannschwerter aufeinander liegen. So wird die zur Verspannung der Dichtung notwendige Kraft erst am Schluss des Einschiebevorganges aufgebaut. Hierdurch wird ein geringer notwendiger Kraftaufwand für den Einbau des Filtereinsatzes erreicht. Ferner ist die Strecke, auf welcher die Flächen aneinander reiben, gering, wodurch die Gefahr des Verschweißens durch Reibungswärme minimiert wird.

In einer Ausführungsform können die ebenen Abschnitte der Kontaktfläche beiderseits des Filterelements stufenweise auf gleichen Höhen, aber an verschiedenen Positionen entlang der Einbaurichtung angeordnet sein.

Von dem in Einbaurichtung 11 liegenden Ende ausgehend sind an dem Rahmen Nuten 28 angeordnet, welche parallel zu der durch die Dichtung 5 aufgespannten Ebene zwischen der auslassseitigen Endfläche 3 und den Kontaktflächen 10 verlaufen. In diese kann eine gehäuseseitige Rippe als Feder eingreifen, wodurch die Gefahr eines Verkantens beim Einbau des Filterelements verringert wird.

An der auslassseitigen Endfläche 3 des Filterelements 6 bildet der Rahmen 4 eine Endscheibe 12, welche die Stirnseite des größeren Filtermedienbalges 6b überdeckt. Auf dieser Endscheibe 12 ist die axial wirkende Dichtung 5 angeordnet, deren Form die Außenkontur des größeren Filtermedienbalgens abbildet. Innerhalb der Dichtung ist eine axial von der Endscheibe abstehende, umlaufende Rippe 13 vorgesehen, welche in einem insbesondere gleichbleibenden Abstand zu der Dichtung um den Strömungskanal 7 verläuft. An dem in Einbaurichtung 11 liegenden Ende des Rahmens ist die umlaufende Rippe 13 abgesenkt, an dem gegenüberliegende Ende ist die umlaufende Rippe 13 gegenüber dem übrigen Bereich erhöht. Dabei steht die Rippe 13 in den nicht abgesenkten Bereichen über die Dichtung über. Die durch die Berührungsfläche der Dichtung in unverformtem Zustand gebildete Fläche wird somit von der umlaufenden Rippe 13 geschnitten.

In einer Ausführungsform der Erfindung weist der Rahmen an dem entgegen der Einbaurichtung 11 liegenden Ende des Filtereinsatzes zwei Führungsfortsätze 14 auf, welche entgegen der Hauptströmungsrichtung von der Endscheibe 12 hinweg verlaufen und einen größeren Abstand von den geraden Seitenflächen bzw. deren gedachter Verlängerung haben als die umliegenden Bereiche des Rahmens. Diese Führungsfortsätze dienen dazu, die Verspannelemente beim Einbau des Filtereinsatzes so zu führen, dass diese Verspannelemente gerade eingeführt und nicht verkantet werden. Die Fortsätze können insbesondere einen Einbau des Filtereinsatzes entgegen der vorgesehenen Einbaurichtung des Filtereinsatzes verhindern.

Die einlassseitigen Stirnseiten der Filtermedienbälge 6a,b sind mittels einer Endscheibe 15 aus flexiblem Material, z. B. geschäumtem PUR dichtend miteinander verbunden, wobei die Stirnseiten vollständig verschlossen sind. Diese Endscheibe weist im Bereich der geraden Seitenflächen 9 sowie im Bereich der Enden des Filtereinsatzes einstückig ausgeformte Abstandshalternoppen 16 auf, welche für eine flexible, schwingungsfeste Abstützung des Filtereinsatzes in einem Gehäuse sorgen können.

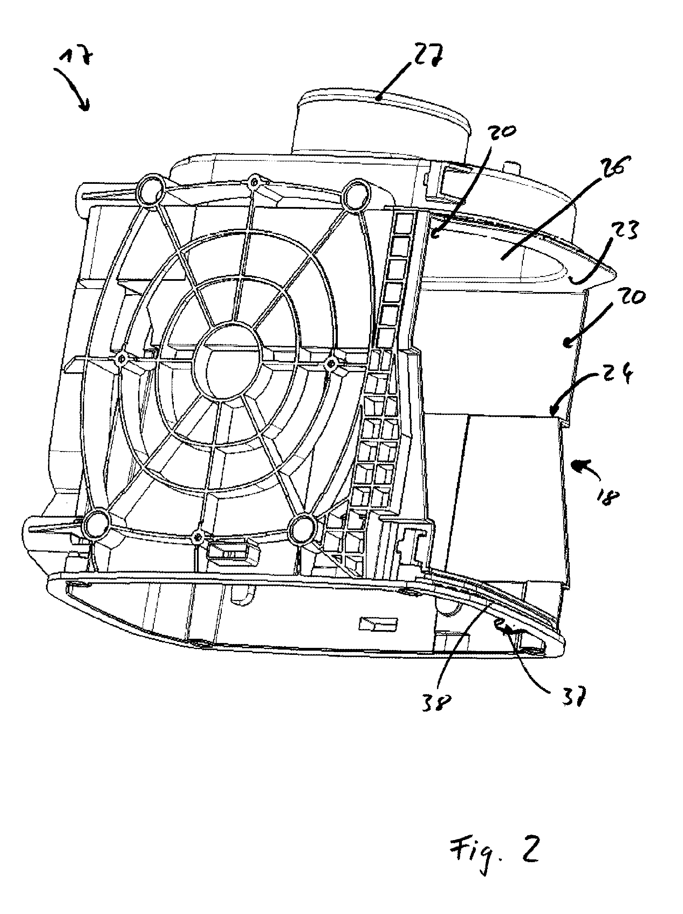

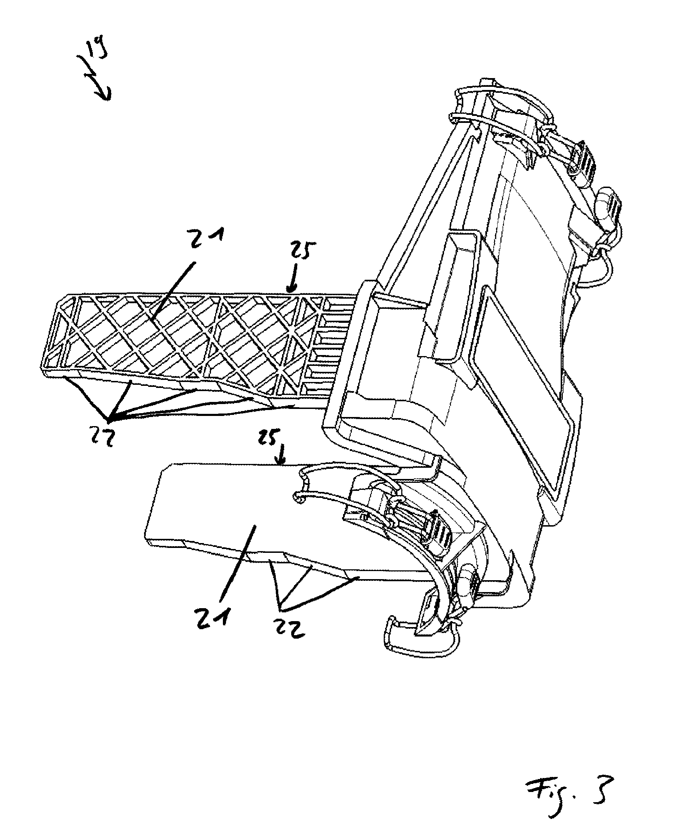

Figur 2 zeigt ein Gehäuse 17 einer erfindungsgemäßen Filtervorrichtung. Im oberen Bereich weist das Gehäuse eine Montageöffnung 18 auf, durch welche ein Filtereinsatz 1 in Einbaurichtung 11 von oben nach unten eingeschoben werden kann. Die in Figur 2 gezeigte Montageöffnung ist durch den in Figur 3 gezeigten Deckel 19 verschließbar. Im Gehäuse 17 sind zwei Ausbuchtungen 20 vorgesehen, in welche die mit dem Deckel verbundenen Verspannschwerter 21 eintauchen. Die Schwerter weisen Verspannflächen 22 auf, welche jeweils ein Höhenprofil aufweisen, welche mit den Höhenprofilen der korrespondierenden Kontaktflächen 10 des Filtereinsatzes 1 in Formschluss bringbar sind, wobei die korrespondierenden Höhenprofile jeweils zueinander eine Gegenform bilden. In der gezeigten Ausführungsform weisen die Höhenprofile jeweils schräge und gerade Bereiche auf, welchen in montiertem Zustand aufeinander liegen.

In einer Ausführungsform ist die Montageöffnung einlassseitig durch einen Henkel 38 begrenzt, an welchem eine in den Innenraum hinein stehende Abkipprippe 37 angeordnet ist, an welche der Filtereinsatz 1 anschlägt, wenn er innerhalb des Gehäuses gekippt wird. Hierdurch wird verhindert, dass der Filtereinsatz beim Herausnehmen an dem Henkel 38 hängen bleiben kann.

Die Ausbuchtungen 20 sind auf der der Dichtfläche 23 gegenüber liegenden Seite mit ebenen Stützflächen 24 versehen, auf welchen sich die Verspannschwerter 21 mit ebenen, korrespondierenden Stützflächen 25 abstützen können. Im an die Dichtfläche anschließenden Innenraumbereich ist die Montageöffnung nach unten, d. h. in Einbaurichtung abgesenkt, um einen leichteren Einbau des Filtereinsatzes 1 in engen Räumen zu ermöglichen. In einer alternativen Ausführungsform können auch die gehäuseseitigen Stützflächen 24 und die korrespondierenden Stützflächen 25 der Verspannschwerter 21 eines der für die Verspannflächen 22 vorgeschlagenen Profile aufweisen.

In Hauptströmungsrichtung innerhalb der Dichtfläche an diese anschließend befindet sich der Montageraum 26 für ein Sekundärluftfilterelement 33. Die Öffnung des Montageraums 26 ist in ihrer Geometrie so ausgeführt, dass sie die umlaufende Rippe 13 des Filtereinsatzes 1 aufnehmen kann und diese mit einem Spalt von insbesondere 1-5 mm Breite umschließt. Im Falle einer Überkopfanordnung wird so ein lose eingeschobener, noch nicht verspannter Filtereinsatz am Herausfallen gehindert.

Im Anschluss an den Montageraum 26 befindet sich der Reinluftauslass 27.

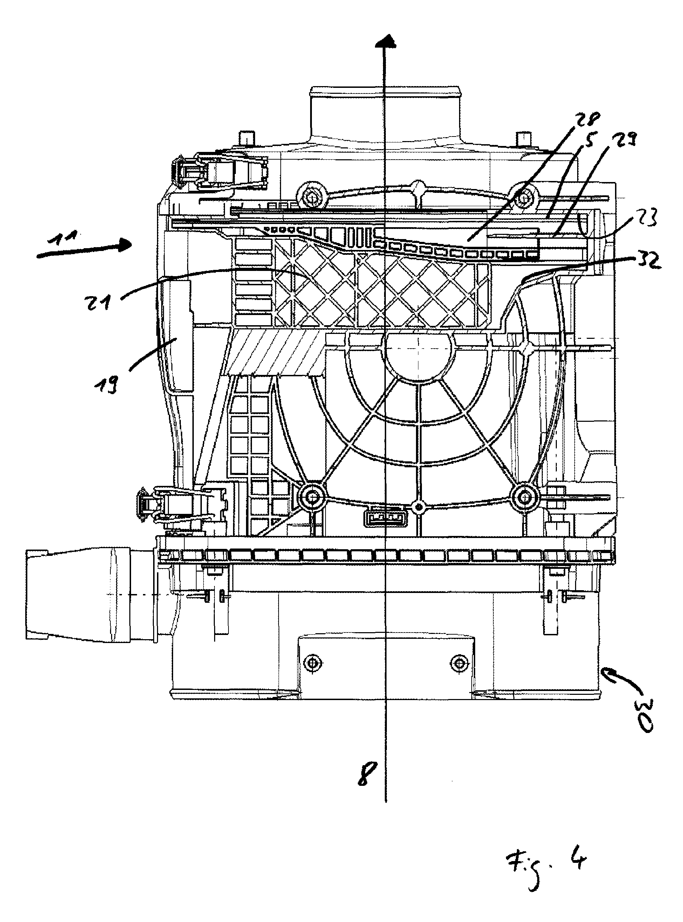

Figur 4 zeigt einen Teilschnitt einer Ausführungsform einer erfindungsgemäßen Filtervorrichtung, wobei der Filtereinsatz verspannt und fixiert ist, d. h. die Dichtung 5 wurde beim Einschieben der Verspannschwerter 21 verpresst, indem die Verspannschwerter 21 entlang der Kontaktflächen 10 des Filtereinsatzes und der Stützfläche der Ausbuchtung 20 abstützend wirken.

Die gehäuseseitigen Rippen 29 tauchen mit Toleranz in die Nuten 28 des Rahmens 4 ein. Beim Einschieben des Filtereinsatzes in das Gehäuse 17 wird zu Beginn des Einschiebevorganges die Dichtung 5 von der Dichtfläche 23 auf Abstand gehalten, indem die umlaufende Rippe 13 im oberen Bereich der Dichtfläche 23 auf dieser aufliegt. Beim weiteren Einschieben wird der Bewegungsspielraum, den der Filtereinsatz z. B. durch die abgesenkte Montageöffnung 18 hat eingeschränkt, um ein Verkanten des Filtereinsatzes zu vermeiden. Dies wird dadurch erreicht, dass die in Einbaurichtung 11 liegenden Führungsfortsätze 31 am Rahmen auf mindestens eine Führungsschräge 32 treffen, weiche den Filtereinsatz 1 beim weiteren Einschieben kurz vor Schluss des Einschiebevorganges in Richtung der Dichtfläche 23 verschiebt. Anschließend tauchen die gehäuseseitigen Rippen 29 in die Nuten 28 des Rahmens ein, wobei einerseits die Bewegungsfreiheit des Filtereinsatzes so weit eingeschränkt wird, dass die Wahrscheinlichkeit eines Verkantens des Einsatzes im Gehäuse 17 reduziert wird, aber andererseits noch ausreichender Spielraum vorhanden ist, um die Dichtung nicht vorzeitig an die Dichtfläche zu pressen, wodurch die Gefahr des Umklappens oder Verkantens der Dichtung 5 vermindert wird. Am Schluss des Einschiebevorganges greift der erhöhte Teil der umlaufenden Rippe 13 in den Montageraum 26 des Sekundärluftfilterelements ein und verhindert so ein Herausfallen des Filtereinsatzes bei Überkopfmontage, bevor der Deckel montiert ist.

Nach der Vorpositionierung des Filtereinsatzes 1 kann nun der Deckel 19 montiert werden, wobei die Verspannschwerter zunächst von den Führungsfortsätzen 14 geführt wird, wobei die Gefahr des Verkantens der Verspannschwerter reduziert wird. Sobald die Verspannflächen 22 der Verspannschwerter 21 mit den Kontaktflächen 10 des Filtereinsatzes in Kontakt kommen, wird der Filtereinsatz in Richtung der Dichtfläche 23 verschoben und die Dichtung 5 auf der Dichtfläche 23 verpresst, wodurch die Rohseite dichtend von der Reinseite getrennt wird.

In einer Ausführungsform umfasst die Filtervorrichtung einen einlassseitigen Vorabscheider, wie in Figur 4 gezeigt. Der Vorabscheider besteht aus einem zweiteiligen Zyklonblock 30, welcher mehrere kleine Einzelzyklone aufweist.

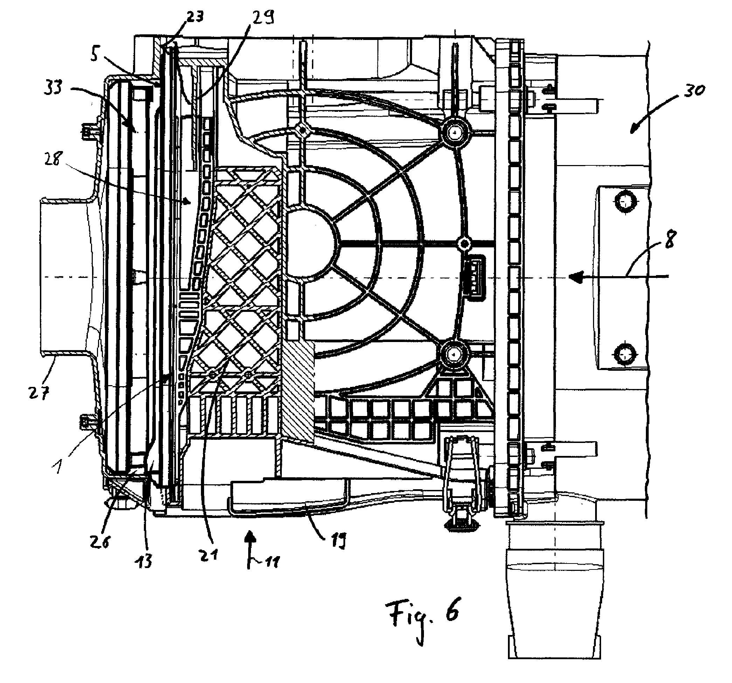

Figur 6 zeigt einen weiteren Schnitt einer Ausführungsform eines erfindungsgemäßen Filtereinsatzes in einer erfindungsgemäßen Filtervorrichtung mit einem gegenüber Figur 4 veränderten Schnittverlauf. Im geschnitten dargestellten Montageraum 26 ins ein Sekundärfilterelement 33 angeordnet, welches eine umlaufende Radialdichtung aufweist, die das Sekundärfilterelement 33 in dem Montageraum fluiddicht verspannt. Die umlaufende Rippe des Filtereinsatzes 1 greift in den Aufnahmeraum 26 ein. Ferner wird deutlich, dass die Dichtung 5 gegen die Dichtfläche in Dichtrichtung verpresst ist, wobei bei dieser Ausführungsform die Dichtrichtung der Hauptströmrichtung 8 entspricht.

## Patentansprüche

1. Filtereinsatz (1), insbesondere Ansauggluftfiltereinsatz für Brennkraftmaschinen umfassend
a. ein Filterelement (6), mit einer einlassseitigen Endfläche (2) und einer zu dieser in Hauptströmungsrichtung beabstandeten auslassseitigen Endfläche (3) und
b. einen entlang der Seitenflächen (9) des Filterelements umlaufenden Rahmen (4) weicher mit dem Filterelement (6) verbunden ist, wobei der Rahmen (4) eine axiale Dichtung (5) trägt, deren Dichtrichtung in oder entgegen der Hauptströmungsrichtung ausgerichtet ist, wobei die Dichtung in Dichtrichtung mit einer Dichtfläche eines Filtergehäuses in Kontakt bringbar ist, wodurch die Einlassseite des Filtereinsatzes dichtend von der Auslassseite trennbar ist,
wobei der Rahmen (4) auf zwei gegenüber liegenden Seiten des Filterelements eine erste und eine zweite Kontaktfläche (10) zum Verspannen des Filterelements
mittels eines ersten und eines zweiten Verspannelements (21) aufweist,
wobei die Kontaktflächen im Wesentlichen entgegengesetzt zur Dichtrichtung ausgerichtet sind,
wobei die Kontaktflächen jeweils ein Höhenprofil aufweisen,
**dadurch gekennzeichnet, dass** die Höhenprofile entlang zwei gegenüberliegenden, im Wesentlichen ebenen oder schwach elliptisch gekrümmten Seitenflächen (9) eine gemeinsame Vorzugsrichtung haben, entlang welcher die Höhenprofile verlaufen und die Höhe überwiegend ansteigt, wobei der Anstieg kontinuierlich oder in einzelnen Abschnitten erfolgt und die erste Kontaktfläche ein erstes Höhenprofil aufweist und die zweite Kontaktfläche ein zweites, von dem ersten Höhenprofil abweichendes Höhenprofil aufweist.

2. Filtereinsatz nach Anspruch 1, **dadurch gekennzeichnet, dass** die Höhe des Höhenprofils durch den Abstand des jeweiligen Kontaktflächenabschnitts von der durch die Dichtung (5) aufgespannten Ebene definiert ist.

3. Filtereinsatz nach einem der vorhergehenden Ansprüche, **dadurch gekennzeichnet, dass** der Rahmen (4) im Bereich der ersten und/oder der zweiten ebenen
oder nur leicht gekrümmten Seitenfläche mindestens eine Nut (28) aufweist, welche
parallel zu der durch die Dichtung (5) aufgespannten Ebene zwischen dieser Ebene
und der Kontaktfläche (10) verläuft und entgegen der Vorzugsrichtung einen Teil des
Höhenprofils hinterschneidet.

4. Filtereinsatz nach einem der vorhergehenden Ansprüche, **dadurch gekennzeichnet, dass** der Rahmen (4) im Bereich der einlassseitigen oder auslassseitigen
Endfläche angeordnet ist und mit einer ringförmigen Endscheibe (12) verbunden oder
einstückig mit dieser ausgebildet ist, welche die Endfläche teilweise in einem äußeren Bereich überdeckt und eine durchströmbare Öffnung aufweist, wobei auf der Endscheibe innerhalb der Dichtung eine ringförmige, teilweise oder vollständig umlaufende Rippe (13) angeordnet ist, welche abstehend von der Endscheibe die
Fläche durchschneidet, welche durch die Dichtfläche der Dichtung in unverspanntem Zustand gebildet wird.

5. Filtereinsatz nach einem der vorhergehenden Ansprüche, **dadurch gekennzeichnet, dass** am Rahmen (4) auf Höhe der Endscheibe (12) ein erster und ein zweiter
Fortsatz in (14) Einbaurichtung angeordnet sind.

6. Filtereinsatz nach einem der vorhergehenden Ansprüche, **dadurch gekennzeichnet, dass** an den Seitenflächen des Filtereinsatzes im Bereich der dem Rahmen gegenüber liegenden Endfläche mindestens zwei Abstandshalternoppen (16) aus elastischem Material angeordnet sind.

7. Filtereinsatz nach einem der vorhergehenden Ansprüche, **dadurch gekennzeichnet, dass** das Filterelement mindestens ein ringförmiges, sternförmig gefaltetes Filtermedium aufweist.

8. Filtereinsatz nach einem der vorhergehenden Ansprüche, **dadurch gekennzeichnet, dass** das Filterelement zwei ringförmige, sternförmig gefaltete Filtermedienbälge aufweist, wobei ein kleiner Filtermedienbalg (6a) konzentrisch in einem
großen Filtermedienbalg (6b) angeordnet ist, wobei der Rahmen (4) im Bereich einer ersten Endfläche mit dem großen Filtermedienbalg dichtend verbunden ist, wobei im Bereich der ersten Endfläche der Innenraum des kleinen Filtermedienbalges vollständig verschlossen ist und wobei im Bereich der zweiten Endfläche die Stirnseiten der beiden Filtermedienbälge dichtend miteinander verbunden sind.

9. Filtereinsatz nach einem der Ansprüche 1 - 6, **dadurch gekennzeichnet, dass** das Filterelement ein Kompaktluftfilterelement mit einer Vielzahl von im Bereich der Endflächen wechselseitig verschlossenen Kanälen oder ein rechteckförmiges, zickzack-förmig gefaltetes Filterelement ist, wobei die Endflächen des Filterelements durch die Faltkanten gebildet sind.

10. Filtervorrichtung, umfassend einen Filtereinsatz nach einem der vorhergehenden Ansprüche und ein Filtergehäuse mit einem Einlassbereich und einem Auslassbereich für zu filtrierende Medien, wobei der Einlassbereich oder der Auslassbereich einen Aufnahmebereich mit einer ringförmigen, mit der Dichtung des Filtereinsatzes korrespondierenden Dichtfläche (23) aufweist.

11. Filtervorrichtung nach Anspruch 10, **dadurch gekennzeichnet, dass** an einer Gehäuseseite eine Montageöffnung (18) vorgesehen ist, durch welche der Filtereinsatz in Einbaurichtung senkrecht zur Hauptströmungsrichtung in das Gehäuse einbringbar ist, wobei die Montageöffnung von einem Deckel (19) verschließbar ist,
wobei an dem Deckel zwei Verspannschwerter (21) angeordnet sind, weiche in das
Filtergehäuse hineinragen, wobei das erste Verspannschwert entlang der ersten Seitenfläche des Filtereinsatzes verläuft und das zweite Verspannschwert entlang der zweiten Seitenfläche des Filtereinsatzes verläuft, wobei die Verspannschwerter Verspannflächen (22) aufweisen, welche in Richtung des Aufnahmebereichs ausgerichtet sind, wobei die Verspannflächen jeweils ein Höhenprofil aufweisen, wobei die Höhenprofile der Verspannflächen jeweils mit dem entsprechenden Höhenprofil der am Rahmen angeordneten Kontaktflächen (10) korrespondieren und eine Gegenform zu diesen bilden, wobei bei montiertem Deckel
und voll in das Filtergehäuse hineinragenden Verspannschwertern die Verspannschwerter eine Kraft auf die korrespondierenden Kontaktflächen des Filtereinsatzes aufbringen, derart, dass die Dichtung (5) des Filtereinsatzes gegen die Dichtfläche (23) des Gehäuses verpresst ist und der Filtereinsatz dadurch im Gehäuse fixiert ist.

12. Filtervorrichtung nach Anspruch 11, **dadurch gekennzeichnet, dass** in den Gehäusewänden zwei Ausbuchtungen (20) vorgesehen sind, welche ebene, in Richtung
des Aufnahmebereichs gerichtete Stützflächen (24) aufweisen, auf welchen sich die
ebenen Stützflächen der Verspannschwerter (21) welche den Verspannflächen
gegenüber liegen, abstützen.

13. Filtervorrichtung nach einem der Ansprüche 10 - 12, **dadurch gekennzeichnet, dass** im Filtergehäuse mindestens eine Rippe (29) vorgesehen ist, welche an einer
Seitenwand des Filtergehäuses angeordnet ist und ausgehend vom Boden des Filtergehäuses in Richtung der Montageöffnung verläuft, wobei die Rippe so ausgebildet ist, dass sie beim Einbau des Filtereinsatzes in die Nut (28) des Filtereinsatzes eintaucht.

14. Filtervorrichtung nach einem der Ansprüche 10 - 13, **dadurch gekennzeichnet, dass** das Filtergehäuse im Inneren an den beiden Seitenwänden jeweils eine Rampenkontur aufweist, deren Rampenfläche in Richtung des Aufnahmebereichs gerichtet sind, wobei sich der Abstand der Rampenfläche zur Aufnahmefläche in Einbaurichtung verringert, wobei der Fortsatz der Endscheibe beim Einbau des Filtereinsatzes von der Rampenfläche in Richtung des Aufnahmebereichs geleitet werden kann, wodurch der Filtereinsatz so positioniert wird, dass die Rippe des Gehäuses in die Nut des Filtereinsatzes eintauchen kann.

15. Filtervorrichtung nach einem der Ansprüche 10 - 14, **dadurch gekennzeichnet, dass** das Filtergehäuse innerhalb der Dichtfläche eine Öffnung aufweist, wobei die Öffnung so ausgebildet ist, dass sie die ringförmige, teilweise oder vollständig umlaufende Rippe (13) auf der Endscheibe des Filtereinsatzes dann umschließt,
wenn der Filtereinsatz vollständig in Einbaurichtung in das Filtergehäuse eingeschoben ist.

## Claims

1. Filter insert (1), in particular intake air filter insert for internal combustion engines comprising
a. a filter element (6) with an inlet-sided end face (2) and an outlet-sided end face (3) spaced apart therefrom in main flow direction and
b. a frame (4), which is connected with the filter element (6), circulating along the side faces (9) of the filter element, wherein the frame (4) carries an axial seal (5) whose sealing direction is aligned in or opposite to the main flow direction, wherein the seal can be brought in sealing direction in contact with a sealing surface of a filter housing so that the inlet side of the filter insert is sealingly detachable from the outlet side,
wherein the frame (4) features on two opposing sides of the filter element a first and a second contact surface (10) for clamping the filter element by means of a first and a second clamping element (21),
wherein the contact surfaces are substantially aligned oppositely to the sealing direction,
wherein the contact surfaces feature each a height profile,
**characterized in that** the height profiles along two oppositely positioned, substantially flat or slightly elliptically curved side faces (9) have a common preferred direction along which extend the height profiles and the height mainly increases, wherein the increase occurs continuously or in individual sections and the first contact surface features a first height profile and the second contact surface features a second height profile differing from the first height profile.

2. Filter insert according to claim 1, **characterized in that** the height of the height profile is defined by the distance of the respective contact surface section from the plane formed by the seal (5).

3. Filter insert according to one of the above claims, **characterized in that** the frame (4) features in the area of the first and/or the second flat or only slightly curved side face at least one groove (28) which extends parallel to the plane formed by the seal (5) between this plane and the contact surface (10) and undercuts opposite to the preferred direction one part of the height profile.

4. Filter insert according to one of the above claims, **characterized in that** the frame (4) is disposed in the area of the inlet-sided or outlet-sided end face and connected with an annular end disk (12) or realized in one piece therewith which covers the end face partially in an outer area and features an opening allowing passage therethrough, wherein on the end disk inside the seal an annular, partially or completely circumferential rib (13) is disposed which intersects, protruding from the end disk, the surface which is formed by the sealing surface of the seal in unclamped state.

5. Filter insert according to one of the above claims, **characterized in that** at the frame (4) a first and a second extension (14) are disposed in mounting direction at the height of the end disk (12).

6. Filter insert according to one of the above claims, **characterized in that** on the side faces of the filter insert in the area of the end face opposite to the frame at least two spacer nubs (16) made of elastic material are disposed.

7. Filter insert according to one of the above claims, **characterized in that** the filter element features at least one annular, star-shaped folded filter medium.

8. Filter insert according to one of the above claims, **characterized in that** the filter element features two annular, star-shaped folded filter medium bellows, wherein a small filter medium bellows (6a) is disposed concentrically in a large filter medium bellows (6b), wherein the frame (4) is sealingly connected with the large filter medium bellows in the area of the first end face, wherein in the area of the first end face the interior space of the small filter medium bellows is completely closed and wherein in the area of the second end face the front sides of the two filter medium bellows are sealingly connected with each other.

9. Filter insert according to one of the claims 1-6, **characterized in that** the filter element is a compact air filter element with a plurality of alternately closed ducts in the area of the end faces or a rectangular, zigzag-shaped filter element, wherein the end faces of the filter element are formed by the fold edges.

10. Filtering device, comprising a filter insert according to one of the above claims and a filter housing with an inlet area and an outlet area for media to be filtered, wherein the inlet area or the outlet area features an accommodating area with an annular sealing surface (23) corresponding with the seal of the filter insert.

11. Filtering device according to claim 10, **characterized in that** on a housing side an assembly opening (18) is provided through which the filter insert is insertable into the housing in mounting direction perpendicular to the main flow direction, wherein the assembly opening can be closed by a cover (19), wherein at the cover two clamping blades (21) are disposed which extend into the filter housing, wherein the first clamping blade extends along the first side face of the filter insert and the second clamping blade extends along the second side face of the filter insert, wherein the clamping blades feature clamping surfaces (22) which are oriented towards the accommodating area, wherein the clamping surfaces feature each a height profile, wherein the height profiles of the clamping surfaces correspond each with the corresponding height profile of the contact surfaces (10) disposed at the frame and create a counterform thereto, wherein with mounted cover and with clamping blades extending fully into the filter housing the clamping blades apply a force to the corresponding contact surfaces of the filter insert in such a way that the seal (5) of the filter insert is pressed against the sealing surface (23) of the housing and that the filter insert is thus fixed in the housing,

12. Filtering device according to claim 11, **characterized in that** in the housing walls two bulges (20) are provided which feature planar support surfaces (24) oriented towards the accommodating area on which the planar support surfaces of the clamping blades (21) rest which are positioned opposite to the clamping surfaces.

13. Filtering device according to one of the claims 10-12, **characterized in that** in the filter housing at least one rib (29) is provided which is disposed on a sidewall of the filter housing and extends from the bottom of the filter housing towards the assembly opening, wherein the rib is designed in such a way that it is inserted into the groove (28) of the filter insert during mounting of the filter insert.

14. Filtering device according to one of the claims 10-13, **characterized in that** the filter housing features inside on both sidewalls respectively a ramp contour whose ramp surface is oriented towards the accommodating area, wherein the distance between the ramp surface and the accommodating surface decreases in mounting direction, wherein the extension of the end disk can be oriented from the ramp surface towards the accommodating area during the mounting of the filter insert so that the filter insert is positioned in such a way that the rib of the housing can be inserted into the groove of the filter insert.

15. Filtering device according to one of the claims 10-14, **characterized in that** the filter housing features an opening inside the sealing surface, wherein the opening is designed in such a way that it surrounds the annular, partially or completely circumferential rib (13) on the end disk of the filter insert when the filter insert is inserted completely in mounting direction into the filter housing.

## Revendications

1. Insert de filtre (1), en particulier insert de filtre à air d'aspiration pour moteurs à combustion interne comprenant
a. un élément filtrant (6), avec une face d'extrémité (2) côté entrée et une face d'extrémité (3) côté sortie située à une certaine distance, dans le sens du flux principal, de la face d'extrémité côté entrée, et
b. un cadre (4) périphérique s'étendant le long des surfaces latérales (9) qui est relié à l'élément filtrant (6), le cadre (4) étant pourvu d'un joint (5) axial dont le sens d'étanchéité est dirigé dans le sens ou dans le sens inverse du sens de flux principal, le joint pouvant être mis en contact, dans le sens d'étanchéité, avec une surface d'étanchéité d'un boîtier de filtre, le côté entrée de l'insert de filtre pouvant être séparé de manière étanche du côté sortie,
le cadre (4) présentant de deux côtés opposés de l'élément filtrant une première et une deuxième surfaces de contact (10) servant à serrer l'élément filtrant au moyen d'un premier et d'un deuxième éléments de serrage (21),
les surfaces de contact étant essentiellement orientées dans le sens inverse du sens d'étanchéité,
les surfaces de contact présentant respectivement un profil de hauteur,
**caractérisé en ce que** les profils de hauteur ont une direction préférentielle commune le long de deux faces latérales (9) opposées, essentiellement planes ou légèrement courbées de façon elliptique, le long de laquelle les profils de hauteur évoluent et la hauteur augmente principalement, la montée étant continue ou divisée en sections individuelles, et la première surface de contact présentant un premier profil de hauteur et la deuxième surface de contact présentant un deuxième profil de hauteur différent du premier profil de hauteur.

2. Insert de filtre selon la revendication 1, **caractérisé en ce que** la hauteur du profil de hauteur est définie par la distance entre la section respective de la surface de contact et le plan formé par le joint (5).

3. Insert de filtre selon l'une des revendications précédentes, **caractérisé en ce que** le cadre (4) présente au moins une rainure (28) dans la zone de la première et/ou de la deuxième face latérale plane ou seulement légèrement courbée, cette rainure s'étendant de manière parallèle au plan formé par le joint (5) entre ce plan et la surface de contact (10) et dépouillant une partie du profil de hauteur dans la direction contraire à la direction préférentielle.

4. Insert de filtre selon l'une des revendications précédentes, **caractérisé en ce que** le cadre (4) est disposé dans la zone de la face d'extrémité côté entrée ou côté sortie et est relié à un disque d'extrémité (12) annulaire ou est exécuté en un bloc avec ce disque, ce disque recouvrant en partie la face d'extrémité dans une zone extérieure et étant pourvu d'une ouverture pouvant être traversée, une nervure (13) annulaire partielle ou complète étant disposée sur le disque d'extrémité à l'intérieur du joint et traversant, en saillie par rapport au disque d'extrémité, la surface formée par la surface d'étanchéité du joint à l'état non serré.

5. Insert de filtre selon l'une des revendications précédentes, **caractérisé en ce qu**'une première saillie et une deuxième saillie sont disposées sur le cadre (4), à hauteur du disque d'extrémité (12), dans le sens de montage (14).

6. Insert de filtre selon l'une des revendications précédentes, **caractérisé en ce qu**'au moins deux protubérances entretoises (16) faites d'un matériau élastique sont disposées sur les faces latérales de l'insert de filtre, dans la zone de la face d'extrémité opposée au cadre.

7. Insert de filtre selon l'une des revendications précédentes, **caractérisé en ce que** l'élément filtrant présente au moins un milieu filtrant annulaire plié en étoile.

8. Insert de filtre selon l'une des revendications précédentes, **caractérisé en ce que** l'élément filtrant présente deux soufflets de milieu filtrant annulaires pliés en étoile, un petit soufflet de milieu filtrant (6a) étant placé de façon concentrique dans un grand soufflet de milieu filtrant (6b), le cadre (4) étant relié de manière étanche au grand soufflet de milieu filtrant dans la zone de la première face d'extrémité, l'intérieur du petit soufflet de milieu filtrant étant intégralement fermé dans la zone de la première face d'extrémité et les faces frontales des deux soufflets de milieu filtrant étant reliées l'une à l'autre de manière étanche dans la zone de la deuxième face d'extrémité.

9. Insert de filtre selon l'une des revendications 1 à 6, **caractérisé en ce que** l'élément filtrant est un élément de filtre à air compact doté d'un grand nombre de canaux fermés en alternance dans la zone de la face d'extrémité ou un élément filtrant rectangulaire plié en accordéon, les faces d'extrémité de l'élément filtrant étant formées par les bords de pliage.

10. Dispositif de filtration, comprenant un insert de filtre selon l'une des revendications précédentes et un boîtier de filtre avec une zone d'entrée et une zone de sortie pour des milieux à filtrer, la zone d'entrée ou la zone de sortie présentant une zone d'admission avec une surface d'étanchéité (23) annulaire et correspondant avec le joint de l'insert de filtre.

11. Dispositif de filtration selon la revendication 10, **caractérisé en ce qu**'une ouverture de montage (18) est prévue sur un côté du boîtier, à travers laquelle l'insert de filtre peut être introduit dans le boîtier dans la direction de montage, verticalement au sens de flux principal, l'ouverture de montage pouvant être obturée par un couvercle (19), deux lames de serrage (21) étant placées sur le couvercle et pénétrant dans le boîtier de filtre, la première lame de serrage évoluant le long de la première face latérale de l'insert de filtre et la deuxième lame de serrage évoluant le long de la deuxième face latérale de l'insert de filtre, les lames de serrage étant pourvues de surfaces de serrage (22) dirigées en direction de la zone d'admission, les surfaces de serrage présentant respectivement un profil de hauteur, les profils de hauteur des surfaces de serrage correspondant respectivement avec le profil de hauteur respectif des surfaces de contact (10) disposées sur le cadre et formant une contre-forme par rapport à ces surfaces, les lames de serrage exerçant, lorsque le couvercle est monté et que les lames de serrage pénètrent intégralement dans le boîtier de filtre, une force sur les surfaces de contact correspondantes de l'insert de filtre telle que le joint (5) de l'insert de filtre est pressé contre la surface d'étanchéité (23) du boîtier et que l'insert de filtre est ainsi fixé dans le boîtier.

12. Dispositif de filtration selon la revendication 11, **caractérisé en ce que** deux bombements (20) sont prévus dans les parois du boîtier, ces bombements présentant des surfaces d'appui (24) planes dirigées en direction de la zone d'admission sur lesquelles s'appuient les surfaces d'appui planes des lames de serrage (21), qui se trouvent à l'opposé des surfaces de serrage.

13. Dispositif de filtration selon l'une des revendications 10 à 12, **caractérisé en ce qu**'au moins une nervure (29) est prévue dans le boîtier de filtre, laquelle est disposée sur une paroi latérale du boîtier de filtre et s'étend, depuis le fond du boîtier de filtre, en direction de l'ouverture de montage, la nervure étant exécutée de telle manière que, lors du montage de l'insert de filtre, elle plonge dans la rainure (28) de l'insert de filtre.

14. Dispositif de filtration selon l'une des revendications 10 à 13, **caractérisé en ce que** le boîtier de filtre présente à l'intérieur sur les deux parois latérales respectivement un contour en rampe dont la surface en rampe est dirigée vers la zone d'admission, la distance entre la surface en rampe et la surface d'admission diminuant dans le sens de montage, la saillie du disque d'extrémité pouvant être guidée, lors du montage de l'insert de filtre, de la surface en rampe en direction de la zone d'admission, de sorte à positionner l'insert de filtre de manière à ce que la nervure du boîtier puisse plonger dans la rainure de l'insert de filtre.

15. Dispositif de filtration selon l'une des revendications 10 à 14, **caractérisé en ce que** le boîtier de filtre présente une ouverture à l'intérieur de la surface d'étanchéité, l'ouverture étant exécutée de manière à ce qu'elle entoure la nervure (13) annulaire partielle ou complète sur le disque d'extrémité de l'insert de filtre lorsque l'insert de filtre est enfoncé totalement, dans le sens de montage, dans le boîtier de filtre.
